(19) Europäisches Patentamt
European Patent Office
Office européen des brevets

(11) EP 2 703 515 A1

(12) EUROPÄISCHE PATENTANMELDUNG

(43) Veröffentlichungstag:
05.03.2014 Patentblatt 2014/10

(51) Int Cl.:
*C23C 2/06* (2006.01)

(21) Anmeldenummer: 12182842.0

(22) Anmeldetag: 03.09.2012

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: voestalpine Stahl GmbH
4020 Linz (AT)

(72) Erfinder:
• Riener, Christian Karl
4040 Linz (AT)
• Angeli, Gerhard
4050 Traun (AT)
• Hofer, Klaus
4101 Feldkirchen an der Donau (AT)
• Fischer, Wilhelm
4470 Enns (AT)

(54) **Verfahren zum Aufbringen eines Schutzüberzugs auf ein Stahlflachprodukt und Stahlflachprodukt mit einem entsprechenden Schutzüberzug**

(57) Es geht um ein Verfahren zum Aufbringen eines Schutzüberzugs (10) auf ein Stahlflachprodukt (100), bei dem der Schutzüberzug (10) erzeugt wird, indem das Stahlflachprodukt (100) mit einer Bandeintrittstemperatur von 400 - 490 Grad Celsius durch ein Zink-Legierungsschmelzbad geführt wird. Das Zink-Legierungsschmelzbad (11) hat eine Badtemperatur von 400 - 480 Grad Celsius und es weist einen Aluminium-Anteil sowie einen Magnesium-Anteil auf. Das Zink-Legierungsschmelzbad (11) hat konkret die folgende Zusammensetzung:

- der Aluminium-Anteil liegt im Bereich zwischen 1.8 und 3.0 Gewichtsprozent;
- der Magnesium-Anteil liegt im Bereich zwischen 1.3 und 2.7 Gewichtsprozent;
- der Aluminium-Anteil in Gewichtsprozent ist grösser als der Magnesium-Anteil in Gewichtsprozent;
- das Verhältnis des Magnesium-Anteils in Gewichtsprozent zur Summe des Aluminium-Anteils in Gewichtsprozent und des Magnesium-Anteils in Gewichtsprozent liegt im Bereich zwischen 0.31 bis 0.44; und
- der Rest des Zink-Legierungsschmelzbads sind Zink und unvermeidbare Verunreinigungen.

2.5 Gew.% Al
1.6 Gew.% Mg

Fig. 9

EP 2 703 515 A1

**Beschreibung**

Die vorliegende Erfindung bezieht sich auf ein Verfahren mit dem sich Stahlflachprodukte mit einem auf Zink basierenden Schutzüberzug beschichten lassen. Die Erfindung betrifft auch Stahlflachprodukte, wie ein Stahlband oder Stahlblech, bei denen mindestens auf einer der Seiten des Stahlflachprodukts ein auf Zink basierender Schutzüberzug aufgebracht wurde. Es geht auch um ein Stahlflachprodukt mit einem entsprechenden Schutzüberzug.

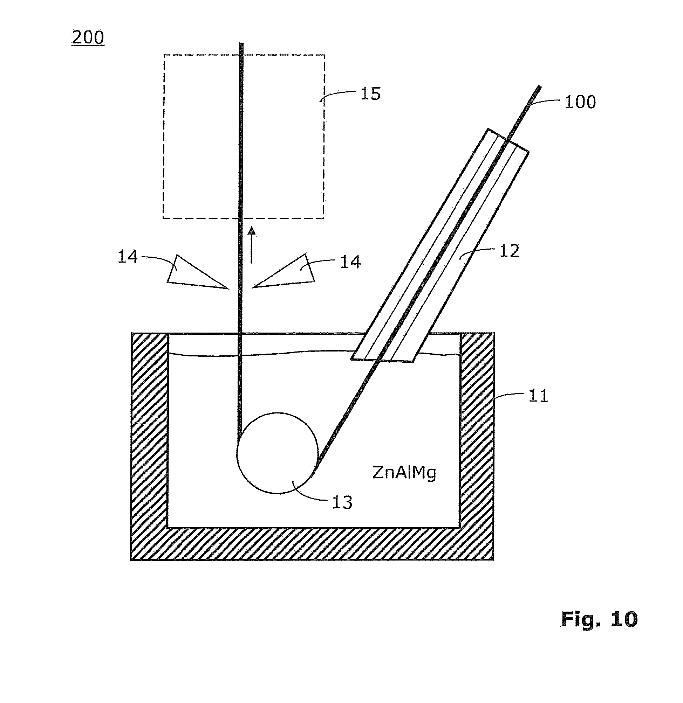

Es ist hinlänglich bekannt, dass zur Verbesserung der Korrosionsbeständigkeit von Stahlflachprodukten 100, wie Stahlbänder oder Stahlblechen, sie mit einer Zinklegierung überzogen werden. Dies geschieht in der Praxis meist indem das Stahlflachprodukt 100 aus einem Ofen kommend in ein Zinklegierungsbad 11 eingebracht wird, wie in Fig. 10 anhand einer beispielhaften Anlage 200 angedeutet. Um das Stahlflachprodukt 100 vor Oxidation zu schützen, wird es typischerweise durch einen Rüssel 12 hindurch in das Zinklegierungsbad 11 eingebracht. Im Bad 11 wird das Stahlflachprodukt 100 durch eine Rolle 13 umgelenkt und nach oben aus dem Bad 11 heraus bewegt. Beim Austauchen aus diesem Bad 11 wird der anhaftende Schmelzfilm des Stahlflachproduktes 100 mit einem Gasstrahl aus den Düsen 14 einer Abstreifdüseneinheit auf die Zielgröße abgestreift und das Stahlflachprodukt 100 dann in einen Kühlbereich 15 überführt. Dieses kontinuierlich arbeitende Verfahren wird im allgemeinen Schmelztauchbeschichten genannt.

Seit langem kommen sogenannte Zn-Mg-Al-Schichtsysteme zum Einsatz, die bereits bei geringen Schichtdicken eine hervorragende Korrosionsschutzwirkung entfalten. Das metallurgische Verhalten eines solchen komplexen Zn-Mg-Al-Schichtsystems im Schmelztauchbad 11 ist aus thermodynamischer Sicht nur mit Aufwand zu bestimmen und es müssen vereinfachende Annahmen getroffen werden, um das Schmelztauchbad 11 an sich und das Überziehen eines Stahlflachprodukts 100 mit einer Schutzschicht in einem solchen Schmelztauchbad 11 simulieren zu können. Das liegt unter anderem daran, dass der Vorgang des Schmelztauchbeschichtens ein dynamischer Vorgang ist, bei dem das Stahlflachprodukt 100 in einem kontinuierlichen Vorgang in das Bad 11 eingebracht und aus dem Bad 11 entnommen wird. Ausserdem kann sich die Zusammensetzung des Bades 11, d.h. die lokal vorliegende Konzentrationen der einzelnen Legierungsanteile kurzzeitig lokal ändern und auch die Temperaturverteilung kann leicht variieren. Es gibt bereits zahlreiche Untersuchungen und Patentanmeldungen, die sich jeweils mit Teilaspekten von Zn-Mg-Al-Schichtsystemen im Schmelztauchbad 11 befassen. Im Folgenden sind Beispiele genannt:

- EP 1 621 645 A1: Diese Patentanmeldung beschreibt ein Zn-Mg-Al-Schichtsystem bei dem Aluminium und Magnesium im Verhältnis 1:1 eingesetzt werden. In diesem Dokument wird dargelegt, dass die Summe dieser Legierungselemente wegen der Schlackebildung im Bad nicht zu hoch sein sollte. Die technische Lehre von EP 1 621 645 A1 sagt unter anderem aus, dass man jenseits von 2.3 Gew.% Aluminium und 2.3 Gew.% Magnesium eine zunehmend brüchige Beschichtung erhält, bei der sich auch die Oberflächenqualität zusehends verschlechtert. Daher wird gemäss dieser Patentanmeldung ein Bereich zwischen 0.6 und 1.3 Gew.% Aluminium und 0.6 bis 1.3 Gew.% Magnesium vorgeschlagen.
- WO 2012 091385 A2: Diese Patentanmeldung beschreibt auch ein Zn-Mg-Al-Schichtsystem, wobei hier neben Zn-Mg-Al noch ein viertes Element (z.B. Silizium oder Lithium) dem Bad zugegeben wird. Laut dieser Patentanmeldung soll [Al/(Al + Mg)] in einem Bereich zwischen 0.38 und 0.48 zu liegen kommen. Diese Bereichsangabe kann umgerechnet werden in folgende Angabe: $0.61 * Mg < Al < 0.77 * Mg$. Daraus ergibt sich, dass laut der technischen Lehre von WO 2012 091385 A2 stets mehr Magnesium als Aluminium in der Schmelze vorhanden sein soll.
- EP 1857566 A1: Diese Patentanmeldung beschreibt wiederum ein Zn-Mg-Al-Schichtsystem, bei dem weitere Stoffe (z.B. Pb, Si und andere) in kleinen Mengen beigefügt werden. Laut der technischen Lehre dieses Dokuments wird vor allem ein Legierungsbad bevorzugt, das zwischen 0.15 und 0.4 Gew.% Aluminium und 0.2 bis 2.0 Gew.% Magnesium enthält. Diese Patentanmeldung beschreibt, dass man durch Anwendung der beschriebenen technischen Lehre eine optimale Kombination von hoher Korrosionsbeständigkeit und optimierter Schweißbarkeit erreicht.
- EP 2119804 A1: Auch diese Patentanmeldung beschreibt ein Zn-Mg-Al-Schichtsystem, bei dem weitere Stoffe in kleinen Mengen (bis zu 0.3 Gew.%) beigefügt werden. Laut der technischen Lehre dieses Dokuments wird vor allem ein Legierungsbad bevorzugt, das zwischen 2 und 8 Gew.% Aluminium und 0 bis 5 Gew.% Magnesium enthält. Aufgabenstellung dieser Patentanmeldung ist die Reduktion der Welligkeit der erstarrten metallischen Schutzschicht.
- Die technische Publikation "Solidification Structure of the Coating Layer on Hot-Dip Zn-11 % Al-3% Mg-0.2% Si-Coated Steel Sheet" von K. Honda et al., Materials Transaction, Vol. 49, Nr. 6, 2008, Seiten 1395 - 1400, beschreibt ein Zn-Mg-Al-Schichtsystem, das aus einem Bad mit 11 Gew.% Aluminium, 3 Gew.% Magnesium und 0.2 Gew.% Silizium besteht. Es wird berichtet, dass anhand der Erstarrungsstruktur ermittelt werden konnte, dass - anders als im Gleichgewichtszustand - $MgZn_2$ statt $Mg_2Zn_{11}$ beobachtet werden konnte. Offensichtlich wurde in dem speziellen Versuchsaufbau und unter den angegebenen Bedingungen $MgZn_2$ als metastabile Struktur (Laves-Phase genannt) gebildet, $Mg_2Zn_{11}$ hingegen nicht. Weitere Angaben hierzu sind der Dissertation von E. De Bruycker zu entnehmen "Zn-Al-Mg alloy coatings: thermodynamic analysis and microstructure related properties", Dissertation, Universität Gent, 2006.
- Es gibt auch technische Ansätze, die vor allem in Produkten aus dem asiatischen Raum zur Anwendung kommen, bei denen man nicht über eine eutektische Rinne zum eutektischen Erstarrungspunkt gelangt. Diese Ansätze liegen jedoch typischerweise im übereutektischen Bereich bei über 5 Gew.% pro Legierungselement. Aus der europäischen Patentanmeldung EP1466994 A1 ist z.B. ein solcher Ansatz bekannt, der ein Metallprodukt hervorbringt, dessen Zn-Mg-Al-Schutzschicht zwischen 2 und 19 Gew.% Aluminium und zwischen 1 und 10 Gew.% Magnesium enthält.

Neben dem reinen Schutz gegen Korrosion, gibt es aber immer weitergehende Anforderungen in Sachen Oberflächengüte zinkbeschichteter Stahlflachprodukte. Vor allem die Automobilindustrie, aber auch der Bausektor erwarten Produkte, die höchsten Oberflächenanforderungen genügen.

Das Aufbringen eines zinkbasierten Schutzüberzugs ist ein sehr dynamischer Vorgang, der vor allem im großindustriellen Maßstab von zahlreichen Parametern und Einflussgrössen bestimmt wird. Es wurden in den letzten Jahren verschiedene Anläufe unternommen, um die Feuerverzinkungsanlagen (wie zum Beispiel die in Fig. 10 gezeigte Anlage 200) so zu betreiben, dass bei gleichbleibend guter Korrosionsschutzwirkung der metallischen Beschichtung die Qualität der mit dem zinkbasierten Schutzüberzug versehenen Oberflächen gesteigert werden kann. Hinzu kommt, dass das ternäre Al-Mg-Zn-Phasendiagramm einer ZnAlMg-Schmelze ein sehr komplexes System mit zahlreichen intermetallischen Phasen sowohl binärer als auch ternärer Art darstellt. Das Bereitstellen homogener Oberflächen ist daher nicht trivial.

Hauptprobleme sind hierbei oftmals Oberflächenstörungen, die bei der Erstarrung der ZnAlMg-Schutzüberzüge infolge selektiver Oxidation des Schmelzfilms auftreten können.

Es stellt sich daher die Aufgabe, ein Verfahren sowie entsprechende Stahlflachprodukte zu schaffen, die korrosionstechnisch einen besonders dauerhaften und robusten Schutzüberzug haben, wobei die Oberfläche des Schutzüberzugs besonders homogen und glatt sein soll. Es wird eine Oberflächenqualität angestrebt, die höchsten Kundenanforderungen gerecht wird.

Ausserdem soll dieses Verfahren möglichst wenig energieaufwändig, kostengünstig, einfach und reproduzierbar sein.

Zusammenfassung der Erfindung

Gemäß Erfindung wird ein kontinuierliches (Schmelztauch-)Verfahren bereit gestellt, das es erlaubt ein Stahlflachprodukt mit einem metallischen (Schutz-)Überzug zu versehen, der das Stahlsubstrat des Stahlflachprodukts vor korrosivem Angriff und anderen äusseren Einflüssen schützt.

Gemäß Erfindung wird ein metallisches Bad mit einer ZnAlMg-Legierung vorgelegt. Diese ZnAlMg-Legierung wird nach dem folgenden neuen Legierungskonzept zusammengesetzt:

- der Aluminium-Anteil (in Gewichtsprozent) ist grösser als der Magnesium-Anteil (in Gewichtsprozent);
- der Aluminium-Anteil (in Gewichtsprozent) liegt im Bereich zwischen 1.8 und 3.0 Gewichtsprozent;
- der Magnesium-Anteil (in Gewichtsprozent) liegt im Bereich zwischen 1.3 und 2.7 Gewichtsprozent;
- Das Verhältnis vom Magnesium-Anteil (in Gewichtsprozent) zur Summe des Aluminium-Anteils (in Gewichtsprozent) und des Magnesium-Anteils (in Gewichtsprozent) liegt im Bereich zwischen 0.31 bis 0.44;
- der Rest sind Zink und unvermeidbare Verunreinigungen.

Gemäß Erfindung liegen diese unvermeidbare Verunreinigungen in einem Bereich, der deutlich kleiner ist als 1 Gewichtsprozent (Gew.%).

Die Festschreibung des neuen ZnAlMg-Legierungskonzepts ergibt sich aus den folgenden Festlegungen und Untersuchungen. Insbesondere wurde in Zusammenhang mit konkreten Untersuchungen die Badzusammensetzung in einem Bereich von 2.0 bis 2.9 Gew.% Al und 1.5 bis 2.4 Gew.% Mg variiert. Das neue ZnAlMg-Legierungskonzept wurde aus grundlegenden thermodynamischen Betrachtungen und daraus abgeleiteten, vereinfachten Modellen ermittelt. Anhand konkreter Versuche konnte belegt werden, dass das Legierungskonzept in der Tat zu sehr guten Ergebnissen führt. Es hat sich gezeigt, dass die Schmelze und deren Erstarrung am Flachstahlprodukt ursächlich mit dem optischen Erscheinungsbild und der Qualität der erstarrten Oberfläche zusammen hängt und dass eine kontrollierte Vorgabe des Erstarrungsverhaltens hervorragende Ergebnisse hervor bringt. Entsprechende Erstarrungskurven konnten dabei als grobe Anhaltspunkte dienen, um die praktische Umsetzung besser verstehen zu können.

Da offensichtlich beim Erstarren der ZnAlMg-Legierung am Stahlflachprodukt mehrere verschiedene Phasen und Legierungen nebeneinander vorliegen und thermodynamisch miteinander wechselwirken, wurde ein praktikabler Weg gesucht, um einen anderen Erstarrungsweg zu beschreiten als bisher. Ziel ist es beim Erstarren der Schutzschicht möglichst ein sogenanntes ternäres Eutektikum der Metalle Zn, Al und Mg zu bilden. Bisher liegen vor der finalen Erstarrung dieses ternären Eutektikums im Wesentlichen zwei unterschiedliche Phasen im Bad vor. Bei diesen beiden Phasen handelt es sich um die primäre Zinkphase und um ein binäres Eutektikum.

Gemäss Erfindung soll im Zuge der Erstarrung bis zum Erreichen des ternären Eutektikum (bei ca. 343°C)

weder MgZn$_2$ noch eine aluminiumreiche Phase sondern möglichst nur Zink ausgeschieden werden.

Gemäss Erfindung wird das neue Legierungskonzept so gewählt, dass beim Erstarren hauptsächlich die primären Zinkdendriten entstehen. Die Zusammensetzung der Schmelze kann jedoch durch substrat-, behandlungsgeschwindigkeits- und abstreifdruckbedingte Variationen im Legierungsaustrag, sowie geringen Schwankungen im Legierungsgehalt der zu chargierenden Zink-Aluminium-Magnesium-Blöcke von der erfindungsgemässen Idealzusammensetzung abdriften, wodurch - nicht beabsichtigt - kurz vor dem Erreichen des ternären Eutektikums noch eine der beiden eutektischen Rinnen (entweder die Mg-reiche Rinne oder die aluminiumreiche Rinne) getroffen werden kann. Dies führt dann neben der Zink-Primärausscheidung in geringem Ausmaß auch zur binären Ausscheidung von MgZn$_2$ und Zn und/oder aluminiumreiche Zink-Phase. D.h. es können MgZn$_2$-Bereiche und/oder Al-Bereiche bzw. Phasen - entstehen. Der Gehalt an - unbeabsichtigt - binär ausgeschiedener Mg- oder Al-reicher Phase liegt in der durcherstarrten Zn-Al-Mg-Schicht stets bei weniger als 10 Gew.%, weitaus überwiegend jedoch bei weniger als 5 Gew.%.

Die Entwicklung des neuen Legierungskonzepts geht zurück auf theoretische Betrachtungen in Gleichgewichtssituationen, diverse Simulationen und deren Umsetzung in konkreten praktischen Versuche. Es konnte gezeigt werden, dass die Theorie, auch wenn sie meist von statischen Legierungsbädern bzw. von Legierungsbädern im Gleichgewicht ausgeht, sich näherungsweise auf die Praxis übertragen lässt. Es wurden vor allem auch Versuche im großtechnischem Produktionsmaßstab vorgenommen. Dabei konnte ermittelt werden, dass es wichtig ist die thermodynamisch bevorzugte Mg$_2$Zn$_{11}$-Phase auszuschließen. Wenn man diese Mg$_2$Zn$_{11}$-Phase ausschließt, ergibt sich ein anderer Erstarrungsweg als bisher. Dieser Erstarrungsweg wird hier vereinfachend als quasi-einphasiger Erstarrungsweg bezeichnet, da man diesen Erstarrungsweg gezielt so vorgibt, dass bis zum Erreichen des ternären Eutektikums im Wesentlichen nur eine Phase ausgeschieden wird. Durch die Vorgabe einer konkreten Legierungszusammensetzung wird der Erstarrungsweg so beeinflusst, dass sich folglich ein quasi-einphasiger Erstarrungsweg ergibt, der relativ direkt den Punkt des ternären Eutektikums erreicht. Das neue Legierungskonzept geht dabei nicht den Weg in Richtung einer eutektischen Rinne und dann entlang dieser Rinne bis zum Punkt des ternären Eutektikums.

Gemäss Erfindung wird der quasi-einphasige Erstarrungsweg so vorgegeben, dass das ternäre Eutektikum der Metalle Zn, Al und Mg nahezu unmittelbar nach der primären Zink-Phase entsteht. Man zwingt den Verlauf der Erstarrung der Legierung auf dem Stahlflachprodukt durch Vorgabe des Verhältnisses vom Aluminium-Anteil (in Gewichtsprozent) zum Magnesium-Anteil (in Gewichtsprozent) in die gewünschte Richtung. Damit wird der quasi-einphasige Erstarrungsweg aufgezwungen.

Gemäss Erfindung wird dieser einphasige Pfad oder Erstarrungsweg vorzugsweise bei allen Ausführungsformen so geführt oder gesteuert, dass er hauptsächlich durch die primäre Erstarrung von Zinkdendriten (Z) gekennzeichnet ist.

Untersuchungen haben gezeigt, dass sich das optimierte Legierungskonzept sowohl im Mikrogefüge der erzeugten ZnAlMg-Schutzschicht, als auch in der verminderten Fehlerhäufigkeit der Oberfläche dieser ZnAlMg-Schutzschicht abbildet. Eine solche ZnAlMg-Schutzschicht weist deutlich weniger Bereiche mit dem binären Eutektikum (BE) (respektive binäre eutektische Strukturen) auf und zeigt hauptsächlich Zinkdendriten und das ternäre ZnAlMg-Eutektikum (TE) (respektive ternäre eutektische Strukturen). In der Praxis kann diese ZnAlMg-Schutzschicht eventuell mit einem geringen Rest an Al-Bereichen bzw. Phasen und/oder binären Eutektikum aus Zn und MgZn2-Phase versehen sein.

Vorzugsweise wird der Erstarrungsprozess am Stahlflachprodukt so vorgegeben bzw. gesteuert, dass der Feststoffanteil vor dem Erstarren des ternären Eutektikums im Bereich zwischen ca. 0.4 und 0.6 (Mol-Anteil des Feststoffs im Bad) liegt. Dieses Bereichsfenster konnte auf theoretischem Weg aus Erstarrungskurven abgeleitet und anhand von Querschliffbildern von Schutzschichten, die mit dem Verfahren der Erfindung hergestellt wurden, bestätigt werden.

Vorzugsweise wird der Erstarrungsprozess am Stahlflachprodukt bei allen Ausführungsformen so vorgegeben bzw. gesteuert, dass der Feststoffanteil vor der finalen eutektischen Erstarrung, d.h. vor dem Erreichen des eutektischen Punkts, unter 55 % liegt.

Vorzugsweise wird das neue Legierungskonzept der Erfindung auf sogenannte schmelztauchbeschichtete Stahlflachprodukte angewendet.

Die Erfindung ermöglicht es Schichthaftungsprobleme auszuschließen oder gegenüber anderen ZnAlMg-Schutzschichten deutlich zu reduzieren. Es bildet sich ein sehr stabiles und oberflächen-homogenes Gefüge als Schutzschicht.

Anders als beim Stand der Technik, werden der Aluminium-Anteil und der Magnesium-Anteil so gewählt, dass deutlich weniger Magnesium im Vergleich zum Aluminium im Schmelzbad vorhanden ist. Der Magnesium-Anteil ist gemäss Erfindung im Schmelzbad stets 21% - 45% geringer ist als der Aluminium-Anteil, d.h. die Erfindung gibt einen asymmetrischen Zusammenhang zwischen dem Aluminium-Anteil und dem Magnesium-Anteil vor. Weiterhin wird vorgegeben, dass der Aluminium-Anteil zusammen mit dem Magnesium-Anteil kleiner ist als 5.7 Gew.%, mit maximal 3.0 Gew.% Aluminium-Anteil und maximal 2.7 Gew.% Magnesium-Anteil.

Die Erfindung lässt sich sowohl auf warm- als auch auf kaltgewalzte Stähle und entsprechende Stahlflachprodukte anwenden.

Weitere vorteilhafte Ausgestaltungen der Erfindung bilden die Gegenstände der abhängigen Ansprüche.

ZEICHNUNGEN

Ausführungsbeispiele der Erfindung werden im Folgenden unter Bezugnahme auf die Zeichnungen näher beschrieben.

FIG. 1A     zeigt eine schematische Darstellung eines Gehaltsdreiecks eines ZnAlMg-Legierungsbads;

FIG. 1B     zeigt eine schematische Darstellung des Gehaltsdreiecks der Fig. 1A, wobei Koordinatenlinien gezeigt sind und der zinkreiche Bereich schraffiert dargestellt ist;

FIG. 1C     zeigt eine schematische Vergrösserung des zinkreichen Bereichs der Fig. 1B, wobei Koordinatenlinien gezeigt sind und der quasi einphasige Erstarrungsweg der Erfindung schematisch dargestellt ist;

FIG. 2A     zeigt eine 3-dimensionale Darstellung in der die Anteile des ternären Systems Al-Mg-Zn im zwei-dimensionalen Bereich und nach oben in den Raum hinein die Temperatur (T) aufgetragen ist. Dieser Darstellung ist der Verlauf des Zustandspunktes gemäss Erfindung (d.h. der quasi einphasige Erstarrungsweg) zu entnehmen);

FIG. 2B     zeigt eine 2-dimensionale Darstellung des zinkreichen Bereichs der Fig. 2A, wobei der quasi einphasige Erstarrungsweg der Fig. 2A in die Ebene projiziert wurde;

FIG. 3      zeigt eine schematische Darstellung eines weiteren Gehaltsdreieck des Zn-Al-Mg Systems in nicht maßstäblicher Form;

FIG. 4      zeigt eine schematische Darstellung einer klassischen Erstarrungskurve eines Al-Mg-Zn Bades, das 2.0 Gewichtsprozent Aluminium und 2.0 Gewichtsprozent Magnesium umfasst;

FIG. 5      zeigt eine schematische Darstellung einer Erstarrungskurve eines Al-Mg-Zn Bades, das 2.0 Gewichtsprozent Aluminium und 2.0 Gewichtsprozent Magnesium umfasst, wobei hier die $Mg_2Zn_{11}$-Phase ausgeschlossen wurde;

FIG. 6      zeigt eine schematische Darstellung einer theoretisch ermittelten Erstarrungskurve eines Al-Mg-Zn Bades der Erfindung, das beispielhafte 2.5 Gewichtsprozent Aluminium und 1.6 Gewichtsprozent Magnesium umfasst, wobei auch hier die $Mg_2Zn_{11}$-Phase ausgeschlossen wurde (der eutektische Punkt ist mit E bezeichnet);

FIG. 7      zeigt eine schematische Darstellung eines beispielhaften, erfindungsgemässen Zusammenhangs zwischen dem Aluminium-Anteil und dem Magnesium-Anteil;

FIG. 8      zeigt eine schematische Darstellung eines Querschliffs durch einen oberen Bereich eines Stahlflachprodukts und einer konventionellen ZnAlMg-Schutzschicht, wobei diese Schutzschicht aus einem Al-Mg-Zn Bad mit 2.0 Gewichtsprozent Aluminium und 2.0 Gewichtsprozent Magnesium erzeugt wurde;

FIG. 9      zeigt eine stark schematische Darstellung eines Querschliffs durch einen oberen Bereich eines Stahlflachprodukts mit einer erfindungsgemässen ZnAlMg-Schutzschicht, wobei diese Schutzschicht aus einem Al-Mg-Zn Bad mit 2.5 Gewichtsprozent Aluminium und 1.6 Gewichtsprozent Magnesium erzeugt wurde (der Anteil des binären Eutektikums BE ist kleiner als < 10% und vorzugsweise < 5%);

FIG.10      zeigt eine stark schematische Darstellung einer bekannten Anlage zum Feuerverzinken.

Detaillierte Beschreibung

Gemäß Erfindung geht es um ein ZnAlMg-Legierungsbad 11 (siehe z.B. Fig. 10). Dieses Legierungsbad 11 und die daraus erzeugte Legierung umfassen im Wesentlichen drei Komponenten Zn, Al und Mg und eventuell unvermeidbare Verunreinigungen. Vorzugsweise liegen diese unvermeidbare Verunreinigungen bei allen Ausführungsformen der Erfindung in einem Bereich, der deutlich kleiner ist als 1 Gew.%.

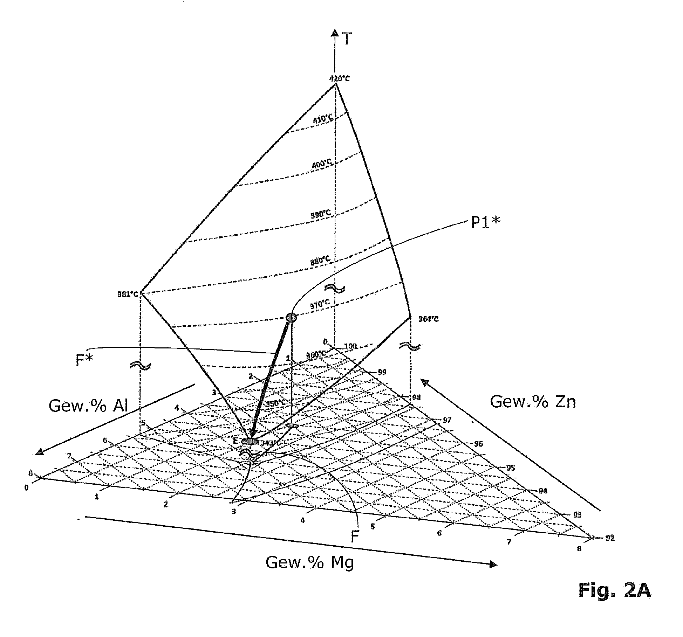

Der Zustand einer entsprechenden Legierung wird durch drei Variabeln festgelegt und zwar durch die Temperatur T und durch zwei Gehaltsangaben (Konzentrationsangaben). Damit steht auch der Gehalt der dritten Komponente fest. Für solche ternäre Systeme ist eine zweidimensionale Darstellung der Phasendiagramme nicht möglich und man verwendet daher dreidimensionale Darstellungen. Die Grundfläche dieser Darstellung beschreibt die Gehalte und nach oben in den Raum hinein wird die Temperatur aufgetragen. Ein- und Mehrphasengebiete bilden in dieser Darstellung dreidimensionale Körper. Eine entsprechende beispielhafte Darstellung ist der Fig. 2A zu entnehmen, die später beschrieben wird.

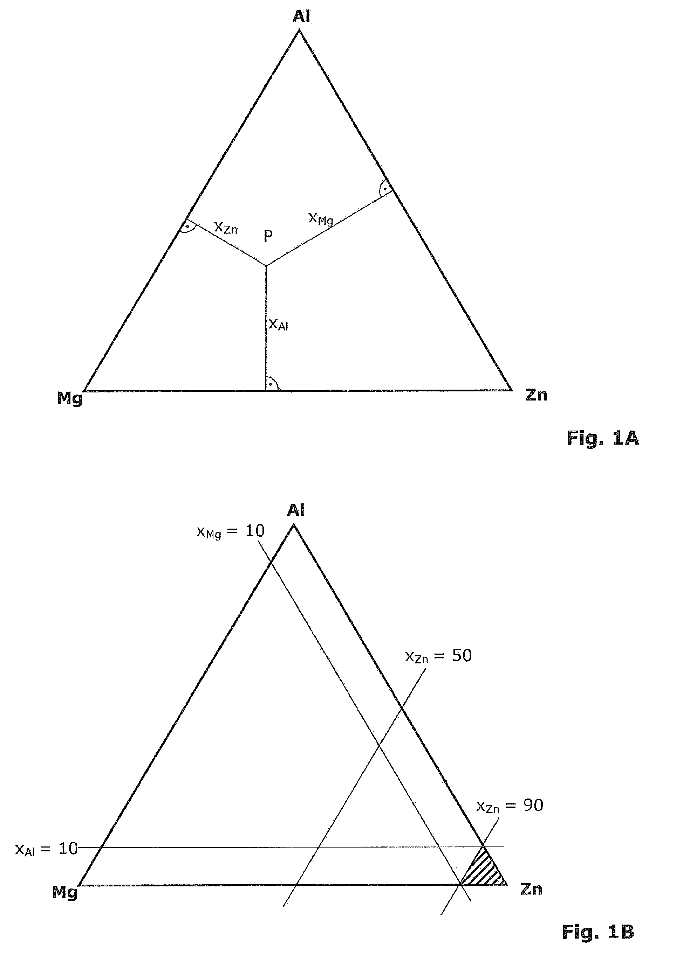

Die Grundfläche eines ternären Phasendiagramms kann als Gehaltsdreieck dargestellt werden, wie für ein ZnAlMg-Legierungsbad in Fig. 1A gezeigt. Die Gehalte der drei Komponenten Zn, Al und Mg werden durch $x_{Zn}$, $x_{Al}$, und $x_{Mg}$ dargestellt. Da nur zwei Gehalte voneinander unabhängig sind, lassen sich die drei Gehalte als ein Punkt in dem Gehaltsdreieck darstellen. Es gilt:

$$x_{Zn} + x_{Al} + x_{Mg} = 100\% \qquad\qquad [1]$$

In Fig. 1A sei P eine beispielhafte Legierung. Dann entsprechen die Abstände des Punktes P von den Seiten des gleichseitigen Dreiecks den drei Gehalten $x_{Zn}$, $x_{Al}$, und $x_{Mg}$. Für jeden Punkt in einem gleichseitigen Dreieck ist nämlich die Summe der drei Abstände von den Seiten gleich der Höhe des Dreiecks. Die Höhe des Dreiecks setzt man gleich 100%. Zum einfacheren Ablesen setzt man ein Dreieckskoordinatennetz ein. Da es bei der Erfindung um ein zinkreichen Bad geht, bei dem der Zinkanteil grösser ist als 90%, d.h. $x_{Zn} > 90$, ist die rechte untere Ecke des Gehaltsdreiecks von besonderer Bedeutung. In Fig. 1B sind folgende Linien des Dreieckskoordinatennetzes eingezeichnet:

$x_{Zn} = 50$ und $x_{Zn} = 90$ als Parallelen zu dem Schenkel Mg-Al; $x_{Mg} = 10$ als Parallele zu dem Schenkel Al-$Z_N$ und $x_{Al} = 10$ als Parallele zu dem Schenkel Mg-Zn. Für Legierungen mit einem Zinkanteil, der grösser ist als 90% ist daher das schraffierte Dreieck der Fig. 1B näher zu betrachten.

Je nach Bemassung der Achsen des Dreieckskoordinatennetzes kann man aus solchen Abbildungen entweder Angaben in Gew.% oder Angaben in at.% ablesen. Der Unterschied zwischen Gew.%-Angaben und Angaben in at.% ist ca. ein Faktor 2,4. Im Zusammenhang mit der vorliegenden Beschreibung und den Abbildungen geht es um Gew. %, falls nicht explizit etwas anderes angegeben ist.

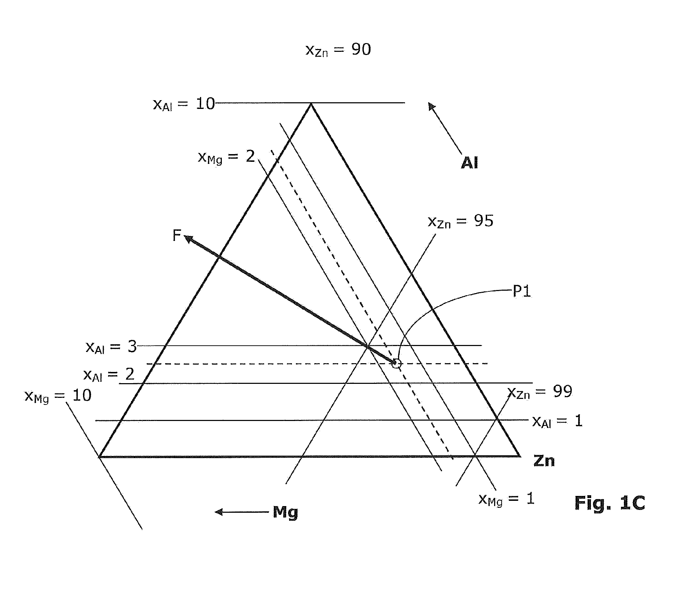

In Fig. 1C ist das schraffierte Dreieck aus Fig. 1B vergrössert und ohne Schraffur dargestellt. In Fig. 1C sind folgende Linien des Dreieckskoordinatennetzes eingezeichnet (Angaben in Gew.%): $x_{Zn} = 90$, $x_{Zn} = 95$ und $x_{Zn} = 99$ als Parallelen zu dem Schenkel Mg-Al; $x_{Mg} = 10$, $x_{Mg} = 2$ und $x_{Mg} = 1$ als Parallelen zu dem Schenkel Al-Zn, sowie $x_{Al} = 10$, $x_{Al} = 3$, $x_{Al} = 2$ und $x_{Al} = 1$ als Parallelen zu dem Schenkel Mg-Zn.

Gemäß Erfindung liegt das Verhältnis vom Magnesium-Anteil (in Gewichtsprozent) zur Summe des Aluminium-Anteils (in Gewichtsprozent) und des Magnesium-Anteils (in Gewichtsprozent) im Bereich zwischen 0.31 bis 0.44. Ganz besonders bevorzugt ist der Bereich zwischen 0.34 bis 0.40. Die folgende Tabelle 1 gibt einige bevorzugte Zahlenpaare an, die anhand von Versuchsreihen ermittelt wurden.

| Tabelle 1: | | | |
|---|---|---|---|
| Beispiel (Versuchsreihe) | Aluminium in Gew.% (x) | Magnesium in Gew.% (y) | Gleichung [2]: y/(x+y) |
| 1.1 | 2 | 0.9 | 0.31 |
| 1.2 | 2 | 1.1 | 0.355 |
| 1.3 | 2 | 1.3 | 0.394 |
| 2.1 | 2.3 | 1.4 | 0.378 |
| 2.2 | 2.3 | 1.6 | 0.41 |
| 2.3 | 2.3 | 1.8 | 0.439 |
| 3.1 | 2.5 | 1.4 | 0.378 |
| 3.2 | 2.5 | 1.6 | 0.39 |
| 3.3 | 2.5 | 1.8 | 0.419 |
| 4.1 | 2.7 | 1.4 | 0.341 |
| 4.2 | 2.7 | 1.6 | 0.372 |
| 4.3 | 2.7 | 1.8 | 0.4 |

Wenn man die letzte Spalte der Tabelle 1 in aufsteigender Reihenfolge sortiert, ergibt sich der folgende Zahlenbereich von 0.31 bis 0.44 (von 0.439 aufgerundet), wie in der letzten Spalte der Tabelle 2 gezeigt ist.

| Tabelle 2: | | | |
|---|---|---|---|
| Beispiel (Versuchsreihe) | Aluminium in Gew.% (x) | Magnesium in Gew.% (y) | Gleichung [2]: y/(x+y) |
| 1.1 | 2 | 0.9 | 0.31 |
| 4.1 | 2.7 | 1.4 | 0.341 |
| 1.2 | 2 | 1.1 | 0.355 |
| 4.2 | 2.7 | 1.6 | 0.372 |

(fortgesetzt)

| Tabelle 2: | | | |
|---|---|---|---|
| Beispiel (Versuchsreihe) | Aluminium in Gew.% (x) | Magnesium in Gew.% (y) | Gleichung [2]: y/(x+y) |
| 2.1 | 2.3 | 1.4 | 0.378 |
| 3.1 | 2.5 | 1.4 | 0.378 |
| 3.2 | 2.5 | 1.6 | 0.39 |
| 1.3 | 2 | 1.3 | 0.394 |
| 4.3 | 2.7 | 1.8 | 0.4 |
| 2.2 | 2.3 | 1.6 | 0.41 |
| 3.3 | 2.5 | 1.8 | 0.419 |
| 2.3 | 2.3 | 1.8 | 0.439 |

Der Zusammenhang zwischen dem Magnesium-Anteil (in Gewichtsprozent) und dem Aluminium-Anteil (in Gewichtsprozent) kann anhand der folgenden Gleichung [2] beschrieben werden:

$$0.31 * y/(x+y) < 0.44 \qquad [2]$$

Die Bereichs- oder Grenzwertangabe der Gleichung [2] kann umgerechnet werden in folgende Angabe:

$$1.56 * Mg < Al * 2.22 * Mg \qquad [3]$$

Weiter kann fest gelegt werden, dass sich der Magnesium-Anteil (in Gewichtsprozent) proportional zu dem Aluminium-Anteil (in Gewichtsprozent) verhält, wie den mittleren beiden Spalten der Tabelle 1 entnommen werden kann. Tabelle 3 gibt die selben Versuchsreihen wieder, wobei die Werte der letzten Spalte der Tabelle 3 in aufsteigender Reihenfolge sortiert sind.

| Tabelle 3: | | | |
|---|---|---|---|
| Beispiel (Versuchsreihe) | Aluminium in Gew.% (x) | Magnesium in Gew.% (y) | Gleichung [4]: x-y |
| 2.3 | 2.3 | 1.8 | 0.5 |
| 1.3 | 2 | 1.3 | 0.7 |
| 2.2 | 2.3 | 1.6 | 0.7 |
| 3.3 | 2.5 | 1.8 | 0.7 |
| 1.2 | 2 | 1.1 | 0.9 |
| 2.1 | 2.3 | 1.4 | 0.9 |
| 3.2 | 2.5 | 1.6 | 0.9 |
| 4.3 | 2.7 | 1.8 | 0.9 |
| 1.1 | 2 | 0.9 | 1.1 |
| 3.1 | 2.5 | 1.4 | 1.1 |
| 4.2 | 2.7 | 1.6 | 1.1 |
| 4.1 | 2.7 | 1.4 | 1.3 |

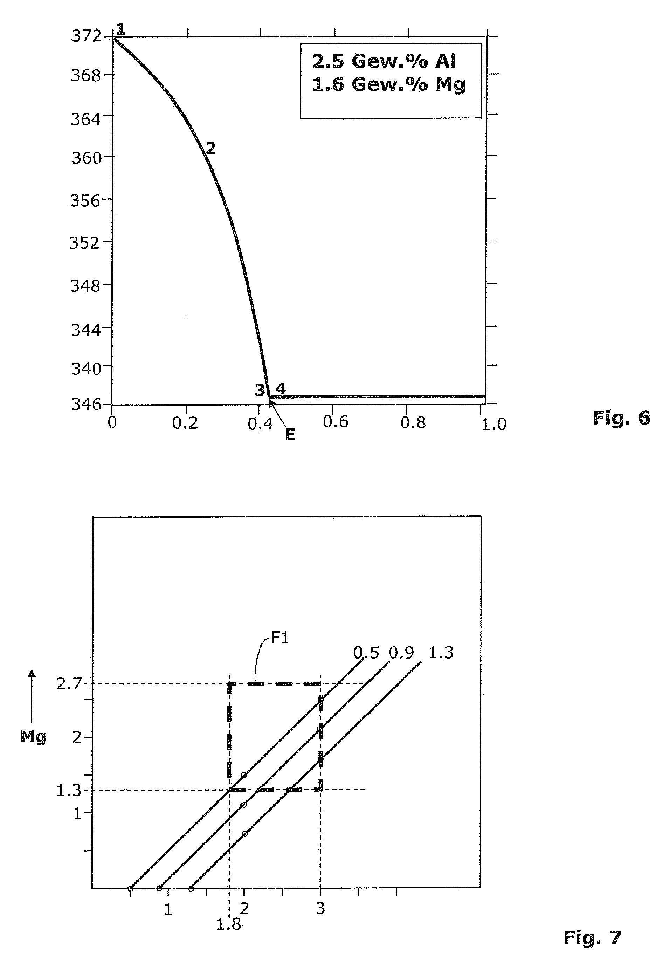

Die Legierungszusammensetzung der ZnAlMg-Schmelze im Zinkbad wird gemäss Erfindung aufgrund von Analysen des Verlaufes von theoretisch errechneten Abkühlkurven eingestellt. Es ist zu berücksichtigen, dass die Abkühlung (Kühlrate), die der Simulation hinterlegt ist, eine andere ist als die wirkliche Kühlrate beim Verzinken. Der Trend ist aber bei theoretisch ermittelten Abkühlkurven mit Ausschluss von $Mg_2Zn_{11}$ und beim konkreten Verzinken der selbe. Eine Abkühlkurve nach Fig. 6 dient daher quasi als Anhaltspunkt oder Leitlinie.

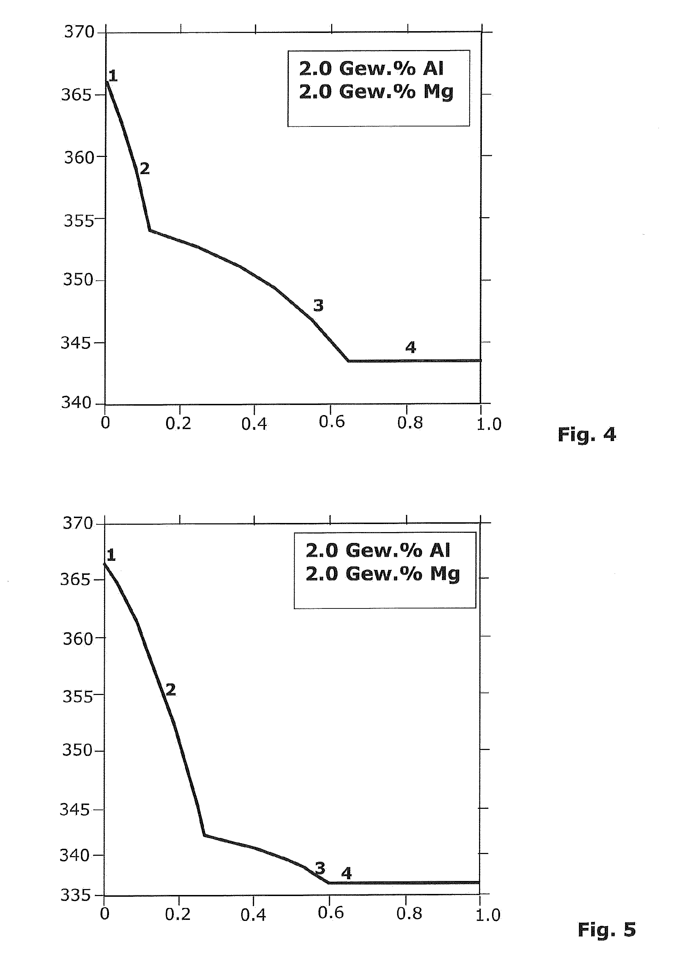

In Fig. 4 ist eine erste Abkühlkurve gezeigt, die eine konventionelle Zusammensetzung eines ZnAlMg-Bades mit 2.0 Gew.% Al und 2.0 Gew.% Mg widerspiegelt. In Fig. 5 ist eine Abkühlkurve gezeigt, die eine konventionelle Zusammensetzung eines ZnAlMg-Bades mit 2.0 Gew.% Al und 2.0 Gew.% Mg widerspiegelt, wobei nun bei der Berechnung der Abkühlkurve die thermodynamisch bevorzugte $Mg_2Zn_{11}$-Phase bewusst ausgeschlossen wurde.

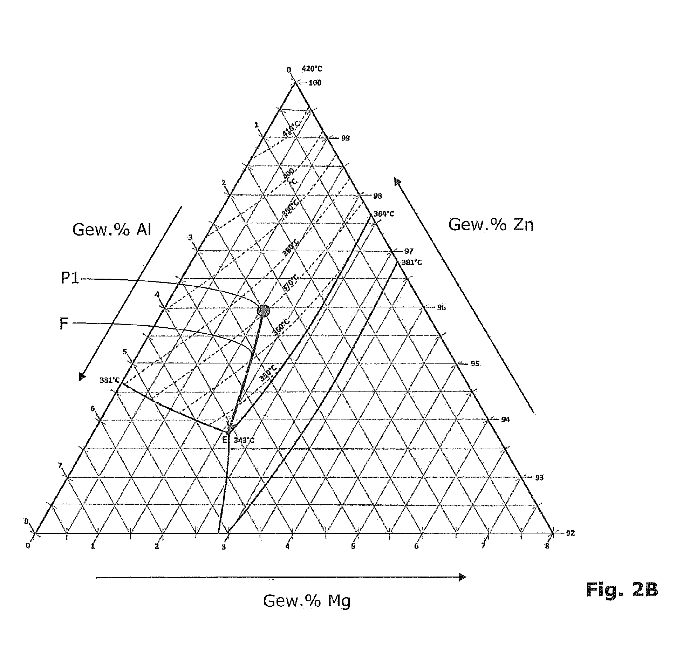

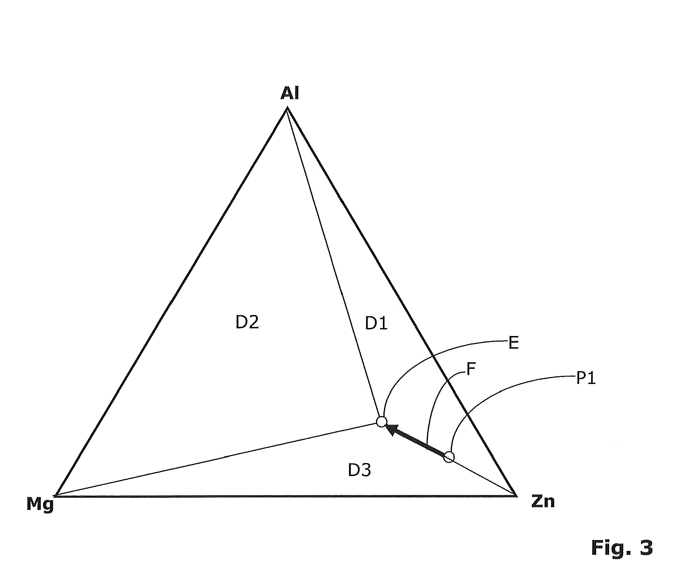

In Fig. 6 hingegen ist eine theoretische Abkühlkurve gezeigt, die eine erfindungsgemässe Zusammensetzung eines ZnAlMg-Bades mit 2.5 Gew.% Al und 1.6 Gew.% Mg widerspiegelt, wobei auch hier bei der Berechnung die thermodynamisch bevorzugte $Mg_2Zn_{11}$-Phase ausgeschlossen wurde. Anhand von Fig. 6 kann man erkennen, dass durch das Ausschliessen der $Mg_2Zn_{11}$-Phase und durch das Festlegen eines speziellen Verhältnisses zwischen dem Aluminium-Anteil (in Gewichtsprozent) und dem Magnesium-Anteil (in Gewichtsprozent) ein nahezu direkter Übergang vom Erstarren der Zinkdendriten (Kurvenabschnitt 2 in diesen Figuren) zum Erstarren des ternären Eutektikums TE (Kurvenabschnitt 4 in diesen Figuren) erfolgt. Der Punkt des ternären Eutektikums ist (wie auch in den Figuren 2 und 3) mit "E" bezeichnet. Weiterhin ist aus der theoretischen Abkühlkurve der Fig. 6 festzustellen, dass der Übergang zum Erstarren des ternären Eutektikums TE (Kurvenabschnitt 4) im Bereich zwischen 0.4 und 0.6 liegt. Vorzugsweise liegt der Feststoffanteil im Bad gemäss Erfindung unterhalb von 50%.

Die Abkühlkurven in den Figuren 4, 5 und 6 zeigen die Erstarrung einer definierten Schmelze (Zn-, Al- und Mg-Gehalte), indem die Art der dabei entstehenden Phase als Feststoffanteil (X-Achse; Mol-Anteil des Feststoffs, der sich im Bad bildet) gegen die Temperatur (Y-Achse; in Grad Celsius) aufgetragen wird. Der mit eine "1" bezeichnete Bereich dieser Diagramme stellt die Flüssigphase im Bad dar. "2" bezeichnet das Erstarren der primären Zinkdendriten. In Fig. 4 beginnt die Schmelze im Bad bei ca. 367°C zu erstarren. In Fig. 5 beginnt das Erstarren auch bei ca. 367°C und in Fig. 6 bei ca. 372°C. "3" bezeichnet das Erstarren des binären Eutektikums und "4" bezeichnet den Bereich des Erstarrens des ternären Eutektikums, das gemäss Erfindung Bereiche/Zonen mit reinem Zink, Bereiche/Zonen mit $MgZn_2$ Legierungen und sehr kleine Bereiche/Zonen mit Al-Phase umfasst. Die wirklichen Werte können in der Praxis leicht von den theoretischen Werten der Abkühlkurven abweichen, aber eine qualitative Aussage ist möglich.

Fig. 4 zeigt ein standardmäßig errechnete Abkühlkurve aus dem bekannten Dreistoffsystem Zn-Al-Mg (mit 2.0 Gew.% Al und 2.0 Gew.% Mg), wobei, wie bis anhin üblich, die thermodynamisch bevorzugte $Mg_2Zn_{11}$-Phase nicht ausgeschlossen wurde. Für Fig. 5 hingegen wurde nicht die standardmäßig errechneten Abkühlkurve aus dem bekannten Dreistoffsystem Zn-Al-Mg herangezogen, sondern eine modifizierte Form dieser Kurve. Die Modifikation lag im rechnerischen Ausschluss der thermodynamisch bevorzugten $Mg_2Zn_{11}$-Phase, da diese Phase in erstarrten und industriell hergestellten Schichten nicht nachgewiesen werden konnte.

Anhand der Fig. 6 kann man erkennen, dass sich die theoretisch ermittelte Erstarrungskurve deutlich gegenüber bisherigen Ansätzen verändert hat. Die Erstarrungskurve nach Fig. 6 zeigt kein binäres Eutektikum BE oder nur noch einen vernachlässigbar geringen Anteil des binären Eutektikums BE.

Der Zusammenhang zwischen dem Magnesium-Anteil (in Gewichtsprozent) und dem Aluminium-Anteil (in Gewichtsprozent) kann alternativ auch anhand der folgenden Gleichung [4] beschrieben werden, wobei die Grenzwerte 0.5 und 1.3 aus der letzten Spalte der Tabelle 3 entnommen wurden:

$$0.5 * \text{x-y} * 1.3 \qquad\qquad\qquad [4]$$

Gleichung [4] definiert einen proportionalen Zusammenhang zwischen dem Magnesium-Anteil (in Gewichtsprozent) und dem Aluminium-Anteil (in Gewichtsprozent). Vorzugsweise besteht bei allen Ausführungsformen der Erfindung ein linearer, proportionaler Zusammenhang, der in Fig. 7 grafisch dargestellt ist. Es sind in Fig. 7 drei entsprechende Geraden gezeigt, wobei x auf der horizontalen Achse und y auf der vertikalen Achse aufgetragen sind. x entspricht dem Aluminium-Anteil in Gewichtsprozent und y entspricht dem Magnesium-Anteil in Gewichtsprozent. In Fig. 7 ist ein Fenster F1 eingezeichnet, das einen besonders bevorzugten Bereich der Erfindung festlegt. Das Fenster F1 zeigt den Bereich an, in dem der Aluminium-Anteil (in Gewichtsprozent) im Bereich zwischen 1.8 und 3.0 Gewichtsprozent liegt und der Magnesium-Anteil (in Gewichtsprozent) im Bereich zwischen 1.3 und 2.7 Gewichtsprozent liegt.

Generell kann festgelegt werden, dass sich die Legierung der Erfindung dadurch auszeichnet, dass der Aluminium-Anteil (in Gewichtsprozent) und der Magnesium-Anteil (in Gewichtsprozent) im Bereich des Fenster F1 liegt, dass sich der Magnesium-Anteil (in Gewichtsprozent) proportional zu dem Aluminium-Anteil (in Gewichtsprozent) verhält und dass der Magnesium-Anteil (in Gewichtsprozent) stets deutlich kleiner ist als der Aluminium-Anteil (in Gewichtsprozent). Der Zusammenhang ist also asymmetrisch.

Anders als beim eingangs beispielhaft aufgelisteten Stand der Technik, werden der Aluminium-Anteil x und der Magnesium-Anteil y so gewählt, dass deutlich weniger Magnesium im Vergleich zum Aluminium im Schmelzbad vorhanden ist. Die folgende Tabelle 4 wurde aus der Tabelle 1 abgeleitet, wobei in der letzten Spalte angegeben ist, wie viel Prozent Magnesium bezogen auf Aluminium in der erfindungsgemässen Schmelze zum Einsatz kommt, d.h. vorgelegt wird.

| Tabelle 4: | | | |
|---|---|---|---|
| Beispiel (Versuchsreihe) | Aluminium in Gew.% (x) | Magnesium in Gew.% (y) | y in Prozent von x (mit x = 100%) |
| 1.1 | 2 | 0.9 | 45 |
| 1.2 | 2 | 1.1 | 55 |
| 1.3 | 2 | 1.3 | 65 |
| 2.1 | 2.3 | 1.4 | 60.87 |
| 2.2 | 2.3 | 1.6 | 69.57 |
| 2.3 | 2.3 | 1.8 | 78.26 |
| 3.1 | 2.5 | 1.4 | 56 |
| 3.2 | 2.5 | 1.6 | 64 |
| 3.3 | 2.5 | 1.8 | 72 |
| 4.1 | 2.7 | 1.4 | 51.85 |
| 4.2 | 2.7 | 1.6 | 59.26 |
| 4.3 | 2.7 | 1.8 | 66.67 |

Aus Tabelle 4 kann man entnehmen, dass maximal 78.26 % (aufgerundet auf 79%) Magnesium bezogen auf den Aluminium-Anteil zu verwenden ist. Aufgerundet kann somit ausgesagt werden, dass der Magnesium-Anteil 21% bis 45% geringer als der Aluminium-Anteil zu wählen ist. Diese Berechnungen sind jeweils auf Gew.% bezogen und können in at%-Angaben umgerechnet werden.

Besonders vorteilhafte Ergebnisse in Sachen der Schutzschichtqualität und Oberflächeneigenschaften werden erzielt, wenn der folgende lineare Zusammenhang gewählt wird:

$$x = y - 0.9 \qquad\qquad [ZZZ]$$

und wenn gilt, dass der Aluminium-Anteil (in Gewichtsprozent) im Bereich zwischen 1.8 und 3.0 Gewichtsprozent liegt und der Magnesium-Anteil (in Gewichtsprozent) im Bereich zwischen 1.3 und 2.7 Gewichtsprozent liegt (wie durch das Fenster F1 in Fig. 7 repräsentiert).

Ganz besonders bevorzugte Ergebnisse liefert eine Zusammensetzung mit einem Aluminium-Anteil (in Gewichtsprozent) von 2.5 und einem Magnesium-Anteil (in Gewichtsprozent) von 1.6. Bei der Darstellung in Fig. 1C handelt es sich um eine schematische Darstellung. In Fig. 1C ist der entsprechende Punkt im Gehaltsdreieck mit P1 bezeichnet. Der quasi einphasige Erstarrungsweg, der in Richtung des gewünschten ternären eutektischen Punkt führt, ist in Fig. 1C vereinfachend durch einen nach links oben weisenden Pfeil F angedeutet. Es ist hier anzumerken, dass der Pfeil F gerade ist, da es sich um eine Projektion aus der drei-dimensionalen Darstellung (siehe hierzu Fig. 2A) in die Ebene des Gehaltsdreiecks handelt. Der eigentliche quasi einphasige Erstarrungsweg F* ist eine Kurve, die entlang einer gekrümmten Fläche zum eutektischen Punkt E verläuft, wie man Fig. 2A entnehmen kann. Dieser ternäre eutektische Punkt E (siehe auch Fig. 2A und 2B) liegt laut Literatur bei einer Zusammensetzung von 93.7 Gew.-% Zn, 2.4 Gew.-% Mg und 3.9 Gew.-% Al bei 343°C.

In Fig. 2A ist eine 3-dimensionale Darstellung der Anteile des ternären Systems Al-Mg-Zn im zwei-dimensionalen Bereich gezeigt. Nach oben in den Raum hinein ist die Temperatur T aufgetragen. Dieser Darstellung ist der Verlauf des Zustandspunktes gemäss Erfindung zu entnehmen. D.h., in Fig. 2A kann man den Verlauf des quasi einphasigen Erstarrungswegs F* im Dreidimensionalen erkennen. Der quasi einphasige Erstarrungsweg F* verläuft auf direktem Weg entlang der gekrümmten Fläche vom Punkt P1* zum eutektischen Punkt E. Fig. 2B zeigt eine 2-dimensionale Darstellung des zinkreichen Bereichs der Fig. 2A. Der quasi einphasige Erstarrungsweg F* der Fig. 2A wurde in die Ebene projiziert und ist nun mit F bezeichnet. Der Punkt P1* der Fig. 2A ist im Zweidimensionalen mit P1 bezeichnet.

Der quasi einphasige Erstarrungsweg F* läuft gemäss Theorie der Erfindung direkt entlang einer gekrümmten Fläche vom Punkt P1* zum ternären eutektischen Punkt E, wie man in Fig. 2A erkennen kann.

Durch das Vorgeben eines quasi einphasigen Erstarrungswegs F*, vermeidet man gemäss Erfindung diejenigen Phasenkoexistenzgebiete, in denen das binäre Eutektikum BE erstarrt. Das binäre Eutektikum BE besteht aus der $MgZn_2$-Phase und der Zink-Phase. Der quasi einphasige Erstarrungsweg F* der Erfindung verläuft bewusst so, dass beim Abkühlen der Schmelze keine Liquidusschnittlinie (eine Liquidusschnittlinie wird auch eutektische Rinne genannt) erreicht wird. Der Zustandspunkt einer erfindungsgemässen Schmelze verläuft nicht entlang einer eutektischen Rinne bis zum ternären eutektischen Punkt E, sondern er strebt direkt den ternären eutektischen Punkt E an..

In Fig. 3 ist ein weiteres Gehaltsdreieck des Zn-Al-Mg Systems in stark schematisierter und nicht maßstäblicher Form gezeigt. Der anzustrebende ternäre eutektische Punkt E ist durch einen kleinen Kreis bezeichnet. Das gleichseitige Gehaltsdreieck ist in drei Dreiecksflächen Al-E-Zn-Al (D1), Al-E-Mg-Al (D2) und Mg-Zn-E-Mg (D3) unterteilt. Generell gilt beim Abkühlen des Zn-Al-Mg Systems, dass alle Legierungen im Bereich der Dreiecksfläche Al-E-Zn-Al (D1) die binäre eutektische Reaktion Zn-Al zeigen. Alle Legierungen im Bereich der Dreiecksfläche Al-E-Mg-Al (D2) zeigen die binäre eutektische Reaktion Mg-Al und alle Legierungen im Bereich der Dreiecksfläche Mg-Zn-E-Mg (D3) zeigen die binäre eutektische Reaktion Mg-Zn. Gemäss Erfindung wird der Erstarrungsweg F so gelegt, dass er in der Projektion ins Zweidimensionale von einem Punkt P1, wie bereits zuvor erwähnt, quasi entlang der Line Zn-E verläuft, um so die binäre eutektische Reaktion Mg-Zn und die binäre eutektische Reaktion Zn-Al zu vermeiden.

Idealerweise erfolgt das Erstarren gemäss neuem Legierungskonzept exakt entlang des quasi einphasigen Erstarrungswegs F*. In der Praxis ergeben sich jedoch Abweichung von den theoretischen Betrachtungen und es wird auch nicht immer gelingen die Badzusammensetzung so vorzugeben, in Echtzeit zu prüfen und nachzujustieren bzw. von Seiten der Anlage 200 her zu steuern (was zum Beispiel durch das Zuchargieren von Legierungs-Blöcken erfolgen kann), dass der ideale einphasige Erstarrungsweg F* der Theorie verfolgt werden kann. Im Zusammenhang mit der vorliegenden Erfindung ist daher nicht von einem uneingeschränkten oder "idealen" einphasigen Erstarrungsweg sondern von einem quasi einphasigen Erstarrungsweg F* die Rede. Dabei wird ein kleiner Korridor zugelassen, der sich entlang des idealen quasi einphasigen Erstarrungswegs orientiert und der direkt zu dem ternären eutektischen Punkt E führt.

Alle binären Mg-Zn-Phasen weisen eine gewisse ternäre Löslichkeit für Aluminium auf. Diese Löslichkeit liegt im Bereich einiger weniger Atom-Prozent (at.%). Der zuvor erwähnte Korridor kann daher kleine Aluminium Anteile als zweite Phase zulassen, wobei der Aluminium Anteil stets kleiner ist als 5% bezogen auf den Feststoffgehalt. Besonders bevorzugt sind gemäss Erfindung Schutzüberzüge, bei denen der Aluminium Anteil stets kleiner ist als 2% bezogen auf den Feststoffgehalt. Aluminium als zweite Phase beim Erstarren ist insofern unkritisch, als die Al-Phase eine vergleichbare Erstarrungswärme freisetzt wie die Zinkphase. D.h. die Al-Phase "stört" nicht den Erstarrungsprozess bzw. die Al-Phase hat keinen nachteiligen Einfluss auf den Verlauf der Erstarrungskurve F, die gemäss Erfindung in etwa dem Verlauf der theoretischen Erstarrungskurve in Fig. 6 folgen soll.

Es wird somit gemäss Erfindung die Zusammensetzung des Bades so vorgelegt, dass beim Erstarren des Schutzüberzugs 10 auf dem Stahlflachprodukt 100 die Erstarrung im Wesentlichen zweiphasig erfolgt, wenn man hier das primäre Zink als eine Phase und das Bad 11 als zweite Phase betrachtet.

Zusammenfassend gesagt, kann dies durch die Vorgabe der folgenden Kriterien erreicht werden:

- der Aluminium-Anteil (in Gewichtsprozent) ist grösser als der Magnesium-Anteil (in Gewichtsprozent);
- der Aluminium-Anteil (in Gewichtsprozent) liegt im Bereich zwischen 1.8 und 3.0 Gewichtsprozent;
- der Magnesium-Anteil (in Gewichtsprozent) liegt im Bereich zwischen 1.3 und 2.7 Gewichtsprozent;
- das Verhältnis vom Magnesium-Anteil (in Gewichtsprozent) zur Summe des Aluminium-Anteils (in Gewichtsprozent) und des Magnesium-Anteils (in Gewichtsprozent) liegt im Bereich zwischen 0,31 bis 0,44.

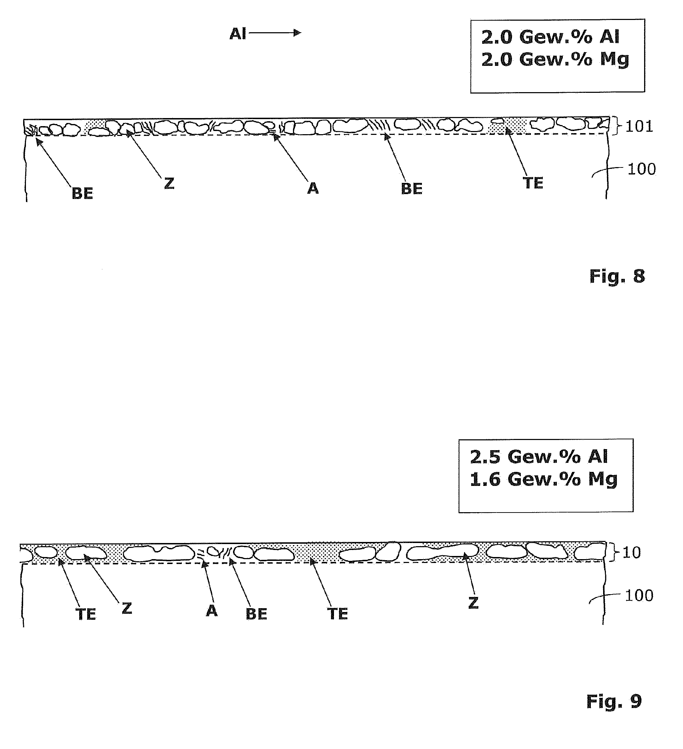

Gemäss Erfindung ergibt sich auf dem Stahlflachprodukt 100 eine Schutzschicht 10 (siehe Fig. 9), die die folgenden vier Phasenbestandteile umfasst (von sehr kleinen Verunreinigungen abgesehen):

- die primären Zinkdendriten (Z),
- das ternäre Eutektikum (TE) bestehend aus Zink, $MgZn_2$ und Aluminium-reicher Zinkphase, sowie
- kleine Anteile der Aluminium-reichen Zinkphase (A) allein, und
- sehr geringe Anteile des binären Eutektikums (BE) bestehend aus Zink und $MgZn_2$,
- der Anteil der Aluminium-reichen Zinkphase (A) und des binären Eutektikums (BE) ist in Summe kleiner als < 10% und vorzugsweise < 5% des gesamten Schichtvolumens. Bevorzugt ist der Anteil der Aluminium-reichen Zinkphase (A) größer als jender des binären Eutektikums (BE).

Fig. 8 zeigt eine stark schematische Darstellung eines Querschliffs durch einen oberen Bereich eines Stahlflachprodukts 100 und durch eine konventionelle ZnAlMg-Schutzschicht 101, wobei diese Schutzschicht 101 aus einem Al-Mg-Zn Bad mit 2.0 Gewichtsprozent Aluminium und 2.0 Gewichtsprozent Magnesium erzeugt wurde. Es handelt sich um ein REM-Bild eines Querschliff, wobei das Bild zur besseren Darstellbarkeit nachbearbeitet wurde. REM steht für Raster-Elektronen-Mikroskop. Es sei angemerkt, dass der Übergang von der Schutzschicht 101 zum Substrat des Stahlflachprodukts 100 typischerweise keine scharfe Grenze darstellt. In Fig. 8 und in Fig. 9 ist dieser Übergang daher durch eine gestrichelte Linie angedeutet. Die Bereiche mit primären Zinkdendriten sind mit einem Z bezeichnet und haben eine Art Blasen- oder Körnerform. Die Bereich des ternären Eutektikums sind mit TE bezeichnet. A steht für die Aluminium-reiche Zinkphase. BE kennzeichnet Bereiche mit binärem Eutektikum (bestehend aus Zink und $MgZn_2$).

Fig. 9 zeigt eine stark schematische Darstellung eines Querschliffs durch einen oberen Bereich eines Stahlflachprodukts 100 mit einer erfindungsgemässen ZnAlMg-Schutzschicht 10, wobei diese spezielle Schutzschicht 10 aus einem Al-Mg-Zn Bad mit 2.5 Gewichtsprozent Aluminium und 1.6 Gewichtsprozent Magnesium erzeugt wurde. Dieser Querschliff zeigt fast ausschließlich primäre Zinkdendriten Z umgeben von ternärem Eutektikum TE mit nur sehr wenigen A-Bereichen und nur mit geringen Spuren von BE. Auch beim Umsetzen des neuen Legierungskonzeptes kann es vorkommen, dass es Reste von A-Bereichen gibt. Diese A-Bereiche sind in gewissen Grenzen tolerierbar und nicht unbedingt von Nachteil. Es können auch sehr geringe Spuren von BE auftreten, wobei deren Anteil in einer erfindungsgemässen ZnAlMg-Schutzschicht 10 vernachlässigbar gering ist, wie bereits beschrieben.

Fig. 9 belegt eindeutig, dass das Verfolgen eines quasi einphasigen Erstarrungswegs zu einer ZnAlMg-Schutzschicht 10 führt, in der zum grossen Teil nur als erste Phase die primären Zinkdendriten Z und als zweite Phase das ternäre Eutektikum TE vorhanden sind.

Außerdem findet man bei schmelztauchverzinkten Stahlbandprodukten und anderen schmelztauchverzinkten Stahlflachprodukten eine intermetallische Zwischenschicht zwischen dem Stahlsubstrat des Stahlflachprodukts 100 und dem Schichtüberzug 10. Diese Zwischenschicht ist allerdings deutlich dünner als der Schichtüberzug 10 der Erfindung und ist daher nicht in den Figuren gezeigt.

Es ist ein klarer Vorteil der Erfindung, dass Schichtüberzüge 10 mit hervorragenden Eigenschaften bereits bei Badtemperaturen von weniger als 460 Grad Celsius hergestellt werden können. Somit können auch Stahlflachprodukte 100 beschichtet werden, bei denen bei höheren Badtemperaturen typische Oberflächendefekte auftreten würden.

Eine Anlage 200 (siehe z.B. Fig. 10), die gemäss Erfindung betrieben wird, weist vorzugsweise einer Bandeintrittstemperatur des Stahlflachprodukts 100 auf, die zwischen 400 und 490 Grad Celsius liegt. Besonders bevorzugt ist eine Bandeintrittstemperatur zwischen 420 und 480 Grad Celsius.

Das Stahlflachprodukt 100 wird gemäss Erfindung vorzugsweise durch ein Zink-Legierungsschmelzbad 11 geführt, das eine Badtemperatur von 400 - 480 Grad Celsius aufweist. Besonders bevorzugt ist eine Badtemperatur zwischen 420 und 475 Grad Celsius.

Durch ein Zuchargieren von Legierungsblöcken kann die Zusammensetzung des Zink-Legierungsschmelzbads 11 jeweils bei Bedarf nachjustiert werden, um die Vorgaben in Sachen Legierungszusammensetzung der Erfindung einhalten zu können.

Mit der Erfindung können Stahlflachprodukte 100 hergestellt werden, die einen Schutzüberzug 10 mit der folgenden Zusammensetzung hat:

- einen Aluminium-Anteil, der im Bereich zwischen 1.8 plus/minus 0.2 Gew.% und 3 plus/minus 0.2 Gew.% liegt; und
- einen Magnesium-Anteil, der im Bereich zwischen 1.3 plus/minus 0.2 Gew.% und 2.7 plus/minus 0.2 Gew.% liegt, wobei der Aluminium-Anteil in Gewichtsprozent grösser ist als der Magnesium-Anteil in Gewichtsprozent.

Vorzugsweise werden dem Legierungsschmelzbad 11 ein weiteres oder mehrere weitere Legierungselemente aus der Gruppe Silizium, Lithium, Titan, Bor, Beryllium, Yttrium, Zircon, Phosphor zugesetzt, wobei der Anteil dieser weiteren Legierungselemente jeweils pro Element kleiner ist als 0.1 Gewichtsprozent. Mit diesen weiteren Legierungselementen können die Eigenschaften der Schutzschicht 10 bei Bedarf modifiziert werden.

Die Erfindung ermöglicht eine stabilere Fahrweise einer Anlage 200, wie z.B. in Fig. 10 gezeigt. Es können reproduzierbar bessere Oberflächenqualitäten erzielt werden. Ausserdem sind - je nach Umsetzung des erfindungsgemässen Legierungskonzepts - die Herstellungskosten für die Schutzschicht 10 niedriger als bei vergleichbaren Verfahren.

**Patentansprüche**

1. Verfahren zum Aufbringen eines Schutzüberzugs (10) auf ein Stahlflachprodukt (100), bei dem der Schutzüberzug (10) erzeugt wird, indem das Stahlflachprodukt (100) mit einer Bandeintrittstemperatur von 400 - 490 Grad Celsius durch ein Zink-Legierungsschmelzbad (11) geführt wird, wobei das Zink-Legierungsschmelzbad (11) eine Badtemperatur von 400 - 480 Grad Celsius aufweist und einen Aluminium-Anteil sowie einen Magnesium-Anteil umfasst, wobei das Zink-Legierungsschmelzbad (11) folgende Zusammensetzung aufweist:

- der Aluminium-Anteil liegt im Bereich zwischen 1.8 und 3.0 Gewichtsprozent;
- der Magnesium-Anteil liegt im Bereich zwischen 1.3 und 2.7 Gewichtsprozent;
- der Aluminium-Anteil in Gewichtsprozent ist grösser als der Magnesium-Anteil in Gewichtsprozent;

- das Verhältnis des Magnesium-Anteils in Gewichtsprozent zur Summe des Aluminium-Anteils in Gewichtsprozent und des Magnesium-Anteils in Gewichtsprozent liegt im Bereich zwischen 0.31 bis 0.44; und
- der Rest des Zink-Legierungsschmelzbads (11) sind Zink und unvermeidbare Verunreinigungen.

2. Verfahren nach Anspruch 1, **dadurch gekennzeichnet, dass**

    - der Aluminium-Anteil im Bereich zwischen 2.0 und 2.9 Gewichtsprozent liegt; und
    - der Magnesium-Anteil im Bereich zwischen 1.4 und 2.4 Gewichtsprozent liegt.

3. Verfahren nach Anspruch 1 oder 2, **dadurch gekennzeichnet, dass** die Zusammensetzung des Zink-Legierungsschmelzbad (11) so gesteuert wird, dass sich beim Erstarren an dem Stahlflachprodukt (100) primäre Zinkdendriten (Z) und ternäres Eutektikum (TE) bilden.

4. Verfahren nach Anspruch 3, **dadurch gekennzeichnet, dass** sich beim Erstarren an dem Stahlflachprodukt (100) ein kleiner Rest an Aluminium-reichen Zinkphasen (A) und des binären Eutektikums (BE) bildet, welche in Summe kleiner als < 10% und vorzugsweise < 5% des gesamten Schichtvolumens aufweisen.

5. Verfahren nach einem der Ansprüche 1, 2 oder 3, **dadurch gekennzeichnet, dass** der Erstarrungsprozess an dem Stahlflachprodukt (100) in einer Anlage (200) steuerungstechnisch so gesteuert wird, dass sich im Zink-Legierungsschmelzbad (11) ein Feststoffanteil vor dem Erstarren des ternären Eutektikums (E) ergibt, der im Bereich zwischen 0.4 und 0.6 Mol-Anteil des Feststoffs im Zink-Legierungsschmelzbad (11) liegt.

6. Verfahren nach einem der Ansprüche 1, 2 oder 3, **dadurch gekennzeichnet, dass** der Erstarrungsprozess an dem Stahlflachprodukt (100) in einer Anlage (200) steuerungstechnisch so gesteuert wird, dass sich im Zink-Legierungsschmelzbad (11) ein Feststoffanteil vor einer finalen eutektischen Erstarrung ergibt, der unter 55 % liegt.

7. Verfahren nach einem der Ansprüche 1, 2 oder 3, **dadurch gekennzeichnet, dass** der Magnesium-Anteil im Zink-Legierungsschmelzbad (11) und damit auch im Schutzüberzug (10) stets 21% bis 45% geringer ist als der Aluminium-Anteil.

8. Verfahren nach Anspruch 1 oder 2, **dadurch gekennzeichnet, dass** durch ein Zuchargieren von Legierungsblöcken die Zusammensetzung des Zink-Legierungsschmelzbads (11) jeweils bei Bedarf nachjustiert wird.

9. Verfahren nach einem der Ansprüche 1, 2 oder 3, **dadurch gekennzeichnet, dass** ein weiteres oder mehrere weitere Legierungselemente aus der Gruppe Silizium, Lithium, Titan, Bor, Beryllium, Yttrium, Zircon, Phosphor dem Legierungsschmelzbad (11) zugesetzt werden, wobei deren Anteil jeweils pro Element kleiner als 0.1 Gewichtsprozent beträgt.

10. Stahlflachprodukt (100) mit einem Schutzüberzug (10) der gemäss dem Verfahren nach einem der Ansprüche 1 bis 9 hergestellt wurde, wobei der Schutzüberzug (10) folgende Zusammensetzung hat:

    - einen Aluminium-Anteil, der im Bereich zwischen 1.8 plus/minus 0.2 Gew.% und 3 plus/minus 0.2 Gew.% liegt; und
    - einen Magnesium-Anteil, der im Bereich zwischen 1.3 plus/minus 0.2 Gew.% und 2.7 plus/minus 0.2 Gew.% liegt,
    - wobei der Aluminium-Anteil in Gewichtsprozent grösser ist als der Magnesium-Anteil in Gewichtsprozent.

11. Stahlflachprodukt (100) nach Anspruch 9, wobei das Verhältnis des Magnesium-Anteils in Gewichtsprozent zur Summe des Aluminium-Anteils in Gewichtsprozent und des Magnesium-Anteils in Gewichtsprozent im Bereich zwischen 0.31 bis 0.44 liegt.

**Fig. 1A**

**Fig. 1B**

$x_{Zn} = 90$

$x_{Al} = 10$

$x_{Mg} = 2$

F

$x_{Zn} = 95$

P1

$x_{Al} = 3$

$x_{Al} = 2$

$x_{Mg} = 10$

$x_{Zn} = 99$

$x_{Al} = 1$

Zn

$x_{Mg} = 1$

**Fig. 1C**

Mg

Fig. 2A

Fig. 2B

Fig. 3

Fig. 4

Fig. 5

Fig. 6

Fig. 7

Al ⟶

2.0 Gew.% Al
2.0 Gew.% Mg

BE    Z         A      BE        TE        101
                                           100

**Fig. 8**

2.5 Gew.% Al
1.6 Gew.% Mg

TE  Z      A  BE    TE         Z        10
                                        100

**Fig. 9**

Fig. 10

**EUROPÄISCHER RECHERCHENBERICHT**

Nummer der Anmeldung

EP 12 18 2842

Europäisches
Patentamt
European
Patent Office
Office européen
des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 125 965 A (INLAND STEEL CO) 5. September 1968 (1968-09-05) * Ansprüche 1,5,8,12,17,19; Beispiel 7 * ----- | 1,10,11 | INV. C23C2/06 |
| X | WO 2006/002843 A1 (CORUS STAAL BV [NL]; MAALMAN THEODORUS FRANCISCUS J [NL]; BLEEKER ROBE) 12. Januar 2006 (2006-01-12) * Seite 5, Zeilen 20-32; Tabellen 1,2,5,6 * ----- | 1,2,7, 10,11 | |
| A | WO 2008/102009 A1 (CORUS STAAL BV [NL]; HANLON DAVID NEAL [NL]; VLOT MARGOT JULIA [NL]) 28. August 2008 (2008-08-28) * Ansprüche 1-19 * ----- | 1-11 | |
| A | EP 1 199 376 A1 (NIPPON STEEL CORP [JP]) 24. April 2002 (2002-04-24) * Ansprüche 1-8 * ----- | 1-11 | |

| RECHERCHIERTE SACHGEBIETE (IPC) |
|---|
| C23C |

Der vorliegende Recherchenbericht wurde für alle Patentansprüche erstellt

| Recherchenort | Abschlußdatum der Recherche | Prüfer |
|---|---|---|
| Den Haag | 24. Januar 2013 | Chalaftris, Georgios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 12 18 2842

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2013

| Im Recherchenbericht angeführtes Patentdokument | | Datum der Veröffentlichung | Mitglied(er) der Patentfamilie | | | Datum der Veröffentlichung |
|---|---|---|---|---|---|---|
| GB 1125965 | A | 05-09-1968 | BE | 669676 | A | 15-03-1966 |
| | | | DE | 1521317 | A1 | 21-08-1969 |
| | | | GB | 1125965 | A | 05-09-1968 |
| | | | SE | 307270 | B | 23-12-1968 |
| WO 2006002843 | A1 | 12-01-2006 | AU | 2005259526 | A1 | 12-01-2006 |
| | | | BR | PI0512880 | A | 15-04-2008 |
| | | | CA | 2571521 | A1 | 12-01-2006 |
| | | | DE | 05758026 | T1 | 30-04-2009 |
| | | | JP | 2008504440 | A | 14-02-2008 |
| | | | KR | 20070029267 | A | 13-03-2007 |
| | | | NZ | 552722 | A | 30-04-2010 |
| | | | RU | 2384648 | C2 | 20-03-2010 |
| | | | US | 2009297881 | A1 | 03-12-2009 |
| | | | WO | 2006002843 | A1 | 12-01-2006 |
| WO 2008102009 | A1 | 28-08-2008 | CN | 101627142 | A | 13-01-2010 |
| | | | EP | 2115178 | A1 | 11-11-2009 |
| | | | JP | 2010519415 | A | 03-06-2010 |
| | | | KR | 20090122346 | A | 27-11-2009 |
| | | | RU | 2009135411 | A | 27-03-2011 |
| | | | US | 2010139816 | A1 | 10-06-2010 |
| | | | WO | 2008102009 | A1 | 28-08-2008 |
| EP 1199376 | A1 | 24-04-2002 | AT | 362002 | T | 15-06-2007 |
| | | | AU | 758643 | B2 | 27-03-2003 |
| | | | AU | 1803000 | A | 12-12-2000 |
| | | | CA | 2374757 | A1 | 30-11-2000 |
| | | | CN | 1342211 | A | 27-03-2002 |
| | | | DE | 69936071 | T2 | 24-01-2008 |
| | | | EP | 1199376 | A1 | 24-04-2002 |
| | | | ES | 2283142 | T3 | 16-10-2007 |
| | | | HK | 1044968 | A1 | 06-05-2005 |
| | | | PT | 1199376 | E | 23-07-2007 |
| | | | TW | I236968 | B | 01-08-2005 |
| | | | US | 6465114 | B1 | 15-10-2002 |
| | | | WO | 0071773 | A1 | 30-11-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1621645 A1
- WO 2012091385 A2
- EP 1857566 A1
- EP 2119804 A1
- EP 1466994 A1

**In der Beschreibung aufgeführte Nicht-Patentliteratur**

- **K. HONDA et al.** Solidification Structure of the Coating Layer on Hot-Dip Zn-11 % Al-3% Mg-0.2% Si-Coated Steel Sheet. *Materials Transaction,* 2008, vol. 49 (6), 1395-1400
- Zn-Al-Mg alloy coatings: thermodynamic analysis and microstructure related properties. *Dissertation,* 2006